# EUROPÄISCHE PATENTANMELDUNG

(11) **EP 1 668 987 A1**
(43) Veröffentlichungstag der Anmeldung: **14.06.2006**
(21) Anmeldenummer: 05026352.4
(22) Anmeldetag: 02.12.2005
(51) Int. Cl.: A22B 5/20

(54) **Verfahren und Vorrichtung zum Separieren des Wirbelkanals aus Schlachttierkörpern**

(30) Priorität: 10.12.2004 DE 102004059504
(71) Anmelder: Müller, Roman, Dr., 02826 Görlitz (DE)
(72) Erfinder: Fromm, Johannes-Hermann, 02829 Neissaue (DE)

(57) **Zusammenfassung**

Die Erfindungen betreffen ein Verfahren und eine Vorrichtung zum Separieren des Wirbelkanals (14) aus Schlachttierkörpern (11), wobei der Schlachttierkörper (11) aufgebrochen sowie ausgenommen, zumindest an seinen gespreizten Hinterkeulen aufgehängt und entsprechend arretiert ist, und bei welchen zwei nebeneinander angeordnete Trennmittel (1,2) zur Anwendung kommen, die von der Keule her zum Hals geführt werden.

Die Trennmittel (1,2) werden an ihren Führungen (3) vor der Bauchseite des Schlachttierkörpers automatisch und/oder manuell derart schräg zueinander gestellt, dass Wirbelkörpermaterial in Form eines den Wirbelkanal (14) aufnehmenden Keils aus den Wirbelkörpern (13) geschnitten wird.

## Beschreibung

Die Erfindungen betreffen ein Verfahren und eine Vorrichtung zum Separieren des Wirbelkanals aus Schlachttierkörpern, wobei der Schlachttierkörper aufgebrochen sowie ausgenommen, zumindest an seinen gespreizten Hinterkeulen aufgehängt und entsprechend arretiert ist, und bei welchen zwei nebeneinander angeordnete Trennmittel zur Anwendung kommen, die von der Keule her zum Hals geführt werden.

Bei der Schlachtung, insbesondere von Rindern oder Kälbern, ist aus bekannten Gründen die Kontamination der Schlachttierkörperoberflächen mit Rückenmarkspartikeln und/oder deren Weitertragen über Bereiche der Schlachthalle unbedingt zu vermeiden.

Aus diesem Grund wurden bereits mehrere unterschiedliche Verfahren und Vorrichtungen zur Entfernung des Rückenmarks aus Schlachttierkörpern vorgeschlagen, die zumindest eine Verminderung einer Kontamination der Schlachtkörperoberflächen mit Rückenmark versprechen.

So wird beispielsweise nach der WO 97/39634 A1 eine Ovalsägevorrichtung mit Endlossägeband bekannt gemacht, womit die gesamte Wirbelsäule des Schlachttierkörpers, einschließlich der Spinalganglien, entfernt werden kann. Abgesehen davon, dass solche Vorrichtungen während des Sägevorgangs nicht auf anatomische Veränderungen der Wirbelsäule der Schlachttierkörper eingestellt werden können, sind wohl bei der praktischen Anwendung solcher Ovalsägen die enormen körperlichen Anstrengungen des Schlachtpersonals und die nicht zu unterschätzenden Fleisch- und Knochenverluste ursächlich dafür, dass sie für praxisübliche Schlachtkapazitäten nicht geeignet sind.

Nach der EP 0 822 751 B1 werden ein Gerät, Messer und Verfahren zum Schneiden entlang Spinalenfortsätzen in einer Karkasse oder Karkassenteil beschrieben, welche im wesentlichen dadurch gekennzeichnet sind, dass das Werkzeug - umfassend zwei Messer, von denen jedes eine zweite Schneidkante entlang der zweiten Kante aufweist - im wesentlichen im rechten Winkel zur Wirbelsäule der Karkasse bewegt wird, bis es anhält, wenn die zweite Schneidkante die Wirbelsäule trifft, und dass die Messer gegen die Wirbelsäule gedrückt werden, während das Werkzeug während des Schneidvorgangs entlang der Dornfortsätze entlang der Wirbelsäule bewegt wird, wobei das Werkzeug mit den Messern auch in einer geneigten Position eingesetzt werden kann.

Obwohl das Werkzeug einer Maschine zugeordnet und dadurch schwere körperliche Arbeit vermieden werden kann, hat diese Lösung insbesondere deshalb keine praktische Bedeutung gewonnen, weil einerseits technisch zu kompliziert und dadurch störanfällig und andererseits in der Anwendung zu korrekturbedürftig, da der Schneidvorgang immer dann unterbrochen werden muss, wenn die Kraft der Vorwärtsbewegung einen bestimmten Schwellenwert überschreitet, beispielsweise wenn ein Messer auf Dornfortsätze trifft, die sehr schief stehen.

Ein weiteres Verfahren und eine Einrichtung zum Entfernen des Rückenmarks beim Schlachten von Tieren werden in der DE 101 28 804 A1 vorgestellt, wobei das Entfernen des Rückenmarks und der Rückenmarkhaut durch Zerkleinern und Ausbringen der Gewebeteile aus der noch nicht aufgesägten Wirbelsäule mit seinen Wirbeln erfolgt. Die Zerkleinerung derselben wird realisiert entweder durch einen Fräser an einer biegsamen Welle oder durch Wasserstrahlen hohen Druckes. Das Ausbringen erfolgt jeweils durch Saugen oder Drücken.

Insbesondere der hohe Wasserdruck ist jedoch ursächlich für den Austritt von Spülflüssigkeit aus dem Wirbelkanal in das umliegende Gewebe, wodurch das Kontaminationsproblem in keinster Weise gelöst ist.

Auch hinsichtlich der Anwendung von Kreissägen zur Entfernung des Rückenmarks aus Schlachttieren sind mehrere Lösungsvorschläge bekannt.

So besteht die Vorrichtung nach der DE 102 16 740 A1 aus zwei miteinander in einer Ebene verbundenen Kreissägen, die einen Abstand voneinander von der Breite etwa des Wirbelkanals aufweisen. Ein Sägeblatt soll dabei die Wirbelkörper bauchseitig und das andere Sägeblatt die Muskulatur sowie die Wirbelkörper rückenseitig durchtrennen. Gleichzeitig, also während des Sägevorganges, soll das Rückenmark abgesaugt werden.

Zumindest aber die Kompliziert- und Kompaktheit dieser Vorrichtung sowie deren schwere Handhabung haben bisher eine nennenswerte praktische Anwendung verhindert.

Wenigstens den letztgenannten Mängeln versuchen die Doppelsägelösungen nach DE 100 60 980 A1 und DE 101 05 588 A1 zu begegnen. Sie sind im wesentlichen durch zwei in einem parallelen Abstand zueinander angeordnete Sägeblätter gekennzeichnet, deren Sägeblattabstand variabel einstellbar ist und die Breite des Rückenmarkkanals übersteigt.

Um aber mit Sicherheit ein Anschneiden des Rückenmarks auszuschließen, muss der Sägeblattabstand großzügig eingestellt werden, was andererseits unter praxisüblichen Schlachtkapazitäten nicht hinnehmbare Fleisch- und Knochenverluste verursacht.

Die bekannten Verfahren resultieren aus der Anwendung der jeweils dargestellten Vorrichtung, und sie sind regelmäßig dem jeweiligen Vorrichtungskonzept, mit allen beschriebenen Nachteilen, zugeordnet.

Den Erfindungen liegen die Aufgaben zugrunde, ein Verfahren und eine Vorrichtung zum Separieren des Wirbelkanals aus Schlachttierkörpern zu konzipieren, die von ihren einfachen Abläufen sowie ihrer relativ einfachen technischen Ausbildung in jede, auch bereits bestehende Schlachthalle integriert werden können, dabei die Mängel der bekannten Lösungen vermeidend, bei richtiger Handhabung mit hoher Sicherheit die Kontamination der Schlachtkörperoberflächen mit Rückenmark ausschließend und Fleisch- und/oder Knochenverluste, auch bei hohen Schlachtkapazitäten, in vertretbaren Grenzen haltend.

Diese Aufgaben werden nach dem Verfahren erfindungsgemäß gelöst, indem die Trennmittel an ihren Führungen vor der Bauchseite des Schlachttierkörpers automatisch und/oder manuell derart schräg zueinander gestellt werden, dass Wirbelkörpermaterial in Form eines den Wirbelkanal aufnehmenden Keils aus den Wirbelkörpern geschnitten wird, und bei einer gattungsgemäßen Vorrichtung nach den Merkmalen des Patentanspruchs 5, wonach die Trennmittel jeweils neben den Wirbelkörpern und an ihren Führungen vor der Bauchseite des Schlachttierkörpers schräg zueinander, einen spitzen Schnittwinkel bildend, automatisch und/oder manuell verstell- und arretierbar angeordnet sind, und die Wirkbereiche der Trennmittel sich hinter dem Wirbelkanal kreuzend eingestellt sind. Zweckmäßige Ausgestaltungen der Erfindungen sind den jeweils rückbezogenen Unteransprüchen entnehmbar.

Die Vorteile der Erfindungen bestehen insbesondere darin, dass eine Gesamtlösung angeboten wird, die neben einer leichten Handhabung ein jeweils Schlachttierkörper bezogenes und damit den anatomischen Aufbau und die Veränderungen jeder einzelnen Wirbelsäule berücksichtigendes Separieren des Wirbelkanals ermöglicht, dabei nur geringe und damit hinnehmbare Knochenverluste verursacht, eine Kontamination der Schlachtkörperoberflächen mit Rückenmark mit hoher Sicherheit ausschließt und problemlos im Rahmen praxisüblicher Schlachtkapazitäten eingesetzt werden kann.

Jeweils ein Ausführungsbeispiel der Erfindungen ist nachstehend veranschaulicht, wobei das Verfahren im Rahmen der Funktionsbeschreibung der Vorrichtung mit beschrieben wird.

Es zeigen
- Figur 1: eine schematische Darstellung einer bevorzugten Ausführungsform der erfindungsgemäßen Vorrichtung
- Figur 2: eine schematische Darstellung eines aus den Wirbelkörpern geschnittenen Keils

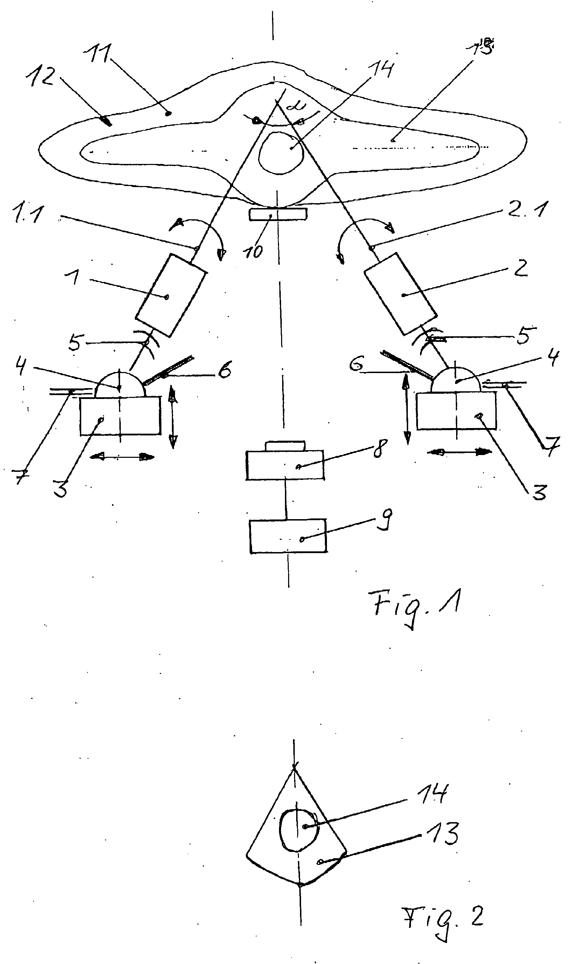

Figur 1 zeigt eine schematische Darstellung einer bevorzugten Ausführungsform der erfindungsgemäßen Vorrichtung in Draufsicht, bei einem nur angedeuteten Schlachttierkörper 11 und der Voraussetzung, dass dieser aufgebrochen sowie ausgenommen und an seinen gespreizten Hinterkeulen aufgehängt ist, und dass die Schnittführung der Trennmittel 1; 2 von der Keule her zum Hals - also von oben nach unten - erfolgt.

Deutlich sind die Wirbelsäule 12 des Schlachttierkörpers 11 und zumindest ein Wirbelkörper 13 erkennbar, ebenso der Wirbelkanal 14, welcher das nicht näher dargestellte Rückenmark des Schlachttiers aufnimmt.

Die Trennmittel 1; 2 sind vor der Bauchseite des Schlachttierkörpers 11 positioniert und stehen mit ihren Führungen 3, welche in bevorzugter Weise als säulen- oder schwalbenschwanzähnliche Ständerführungen ausgebildet sein sollten, über ihre jeweils zugeordneten Aufnahmeelemente 4 und vorzugsweise über Einstellelemente 5 in Wirkverbindung. Dabei wurde insbesondere im Zusammenhang mit den Führungen 3 in der Zeichnung angedeutet, dass diese sowohl zum Schlachttierkörper 11 hin und zurück als auch zueinander und voneinander weg bewegbar sind. Somit wird eine erste und damit Grobpositionierung der Trennmittel 1; 2 zur Schnittführung ermöglicht.

Die Führungen 3 sind in geeigneter Weise auf dem Fußboden arretierbar ausgebildet und gestatten aufgrund ihrer Bauhöhe die Schnittführung der Trennmittel 1; 2 von der Keule des Schlachttierkörpers 11 her bis zum Hals.

Deutlich ist in Figur 1 ebenfalls zu erkennen, dass die Trennmittel 1; 2 jeweils neben den Wirbelkörpern 13 und schräg derart zueinander angeordnet sind, dass ein spitzer Schnittwinkel α gebildet wird, wobei sich die Wirkbereiche 1.1; 2.1 der Trennmittel 1; 2 hinter dem Wirbelkanal 14 kreuzen. Dadurch kann, wie in Figur 2 dargestellt, Wirbelkörpermaterial in Form eines den Wirbelkanal 14 aufnehmenden Keils aus den Wirbelkörpern 13 geschnitten werden.

Um aber eine optimale Schnittführung, worunter im Rahmen dieser Erfindung das Vermeiden jeglicher Verletzungen des Wirbelkanals 14 bei nur geringen Knochenverlusten verstanden wird, realisieren zu können, sind bevorzugt zwischen den Trennmitteln 1; 2 und ihren Aufnahmeelementen 4 die bereits erwähnten Einstellelemente 5 vorgesehen, die sowohl eine Schnittwinkeleinstellung als auch eine vertikale sowie horizontale Einstellung der Trennmittel 1; 2 ermöglichen sollen. Hier könnten Kugelgelenke allein oder in Kombination mit anderen bekannten Gelenkvarianten zum Einsatz kommen, es wäre aber auch möglich, die Aufnahmeelemente 4 selbst mit vergleichbaren Einstellmöglichkeiten auszubilden. Unabhängig von der gewählten Variante würde erreicht, dass, nach der entsprechenden Positionierung der Führungen 3, alle wichtigen und zu einer optimalen Schnittführung gebotenen Möglichkeiten hinsichtlich erforderlicher Positionskorrekturen der Trennmittel 1; 2 während der Schnittführung und bei Berücksichtigung der tatsächlichen Gegebenheiten - insbesondere unter dem Aspekt des anatomischen Aufbaus der Wirbelsäule 12 - in diese Bereiche, und damit außerhalb der Führungen 3, gelegt und konzentriert sind, was die Handhabung jedes Trennmittels 1 und 2, unabhängig davon, ob diese manuell oder automatisch geführt werden, wesentlich vereinfacht und erleichtert.

Zur möglichen Schnittführung von der Keule her zum Hals des Schlachttierkörpers 11 müssen die Trennmittel 1; 2 an ihren Führungen 3 vertikal bewegbar sein. Dies kann manuell derart erfolgen, indem die Trennmittel 1: 2 über ihre Aufnahmeelemente 4 und mittels Griffelementen 6 einzeln vertikal bewegt werden, möglich wäre es aber auch, einen in der Zeichnung nicht dargestellten Steuerarm, welcher beide Trennmittel 1: 2 oder deren Aufnahmeelemente 4 miteinander verbindet, einzusetzen, und so die Trennmittel 1: 2 gemeinsam vertikal zu bewegen. Als besonders vorteilhaft hat sich aber erwiesen, die Aufnahmeelemente 4 mittels motorischer Antriebe 7 an den Führungen 3 vertikal bewegbar auszubilden.

Als die bevorzugteste Ausführungsvariante sollte jedoch eine automatische Schnittführung der Trennmittel 1; 2 gewählt werden.

Dazu ist eine Steuerung vorgesehen, die zumindest eine vor der Bauchseite des Schlachttierkörpers 11 positionierte optische Erfassungseinrichtung 8 und einen Auswert- und Steuerteil 9 aufweisen sollte. Als optische Erfassungseinrichtung 8 ist aus Gründen einer unkomplizierten Ausbildung der Vorrichtung eine Kamera vorgesehen, welche den anatomischen Aufbau der Wirbelsäule 12, mit allen konkreten Gegebenheiten der Wirbelkörperpartie dieses Schlachttierkörpers 11, erfasst und diese Daten zum Auswert- und Steuerteil 9 weitergibt. Das Auswert- und Steuerteil 9 bereitet die erfassten und übermittelten Daten entsprechend auf und steuert die motorischen Antriebe 7 der Aufnahmeelemente 4 sowie die Einstellelemente 5 an. Dabei werden die Einstellelemente 5, unter Berücksichtigung einer optimalen Schnittführung, derart gesteuert, dass auf notwendige Veränderungen in der Schnittführung der Trennmittel 1; 2 vorrangig durch vertikale Einstellungsveränderungen der Trennmittel 1; 2 reagiert wird. Daraus resultiert schlussendlich zwar eine geringfügige Vergrößerung oder Verkleinerung des Schnittwinkels α, was aber durch eine automatische Anpassung der Wirkbereich 1.1; 2.1 der Trennmittel 1; 2 kompensiert wird.

Nach der Erfindung können als Trennmittel 1; 2 alternativ entweder kettensägenartige Trennelemente, denen ein Einzel- oder ein Zentralantrieb zugeordnet ist, oder Laser, denen eine Einzel- oder Zentralsteuerung zugeordnet ist, eingesetzt werden. Während die Anwendung kettensägenartiger Trennelemente eine konservativere Lösungsvariante darstellt und einen höheren technischen Aufwand, insbesondere bei erforderlichen vertikalen Einstellungsveränderungen dieser Trennelemente während der Schnittführung, erfordert, lassen sich diese Probleme bei der bevorzugten Anwendung von Laser, durch die relativ einfache Steuerungsmöglichkeit des Laserstrahls hinsichtlich seiner Intensität, seines Wirkbereiches und der Strahlführung, insbesondere bei erforderlichen geringfügigen Schnittwinkelveränderungen während der Schnittführung, technisch wesentlich einfacher und optimaler lösen.

Nachfolgend wird die erfindungsgemäße Vorrichtung zum Separieren des Wirbelkanals aus Schlachttierkörpern in Funktion beschrieben, wobei davon ausgegangen wird, dass als Trennmittel 1; 2 kettensägenartige Trennelemente zur Anwendung kommen, die Schnittführung automatisch erfolgt, die Führungen 3 bereits entsprechend positioniert sind, und dass das erfindungsgemäße Verfahren im Rahmen dieser Funktionsbeschreibung mit beschrieben wird.

Der Schlachttierkörper 11 ist, wie bereits mehrfach beschrieben, aufgehängt und wird erforderlichenfalls mittels Druckelementen 10 in der gewünschten Position gehalten. Die beiden Trennmittel 1; 2 sind zumindest nahe der obersten Position an den Führungen 7 in Ausgangsstellung vor der Bauchseite des Schlachttierkörpers 11 sowie jeweils neben den Wirbelkörpern 13 der Wirbelsäule 12 angeordnet und schräg zueinander gestellt.

Die optische Erfassungseinrichtung 8 nimmt die Wirbelkörperpartie des Schlachttierkörpers 11 auf und gibt diese Daten zum Auswert- und Steuerteil 9 weiter, welches mit den motorischen Antrieben 7 der Aufnahmeelemente 4 und den Einstellelementen 5 in Wirkverbindung steht.

Nunmehr werden die Schwertspitzen der kettensägenartigen Trennelemente derart positioniert, dass die Wirkbereiche 1.1; 2.1 der Trennmittel 1; 2 sich hinter dem Wirbelkanal 14 kreuzen und unmittelbar danach enden, unter Berücksichtigung dessen, dass ein optimaler spitzer Schnittwinkel α eingestellt ist. Dieser ist so gewählt, dass bei geringst möglichen Knochenverlusten der Wirbelkanal 14 während der Schnittführung mit Sicherheit nicht verletzt wird.

Zum Separieren des Wirbelkanals 14 werden die Trennmittel 1; 2 derart angesteuert, dass sie an den Führungen 7 herunter bewegt werden, wobei der Trennschnitt des einen Trennmittels 2 dem des anderen Trennmittels 1 folgt. Demzufolge beginnt das eine Trennmittel 1 die Schnittführung und beendet diese auch zuerst. Das Ergebnis ist ein aus den Wirbelkörpern 13 herausgeschnittenes Wirbelkörpermaterial in Form eines den Wirbelkanal 14 aufnehmenden Keils.

Sollte mittels der optischen Erfassungseinrichtung 8 festgestellt werden, dass sich die Wirbelsäule 12 zum Hals des Schlachttierkörpers 11 hin vergrößert, woraus resultiert, dass sich auch die Abmessungen des Wirbelkanals 14 verändern, dann wird über das Auswert- und Steuerteil 9 die vertikale Stellung der kettensägenartigen Trennelemente kurzzeitig geringfügig derart verändert, dass sich der Schnittwinkel α ebenfalls geringfügig vergrößert. Sollte aber aufgrund der erfassten Anatomie der Wirbelsäule 12 eine geringfügige Verkleinerung des Schnittwinkels α angezeigt sein, dann kann eine Schnittführung der Trennmittel 1; 2 gegebenenfalls bis in die Dornfortsätze möglich werden.

In jedem Fall ist der Wirbelkanal 14 sicher separiert und bei richtiger Handhabung eine Kontamination der Schlachttierkörperoberfläche mit Rückenmarkspartikeln und/oder deren Weitertragen über Bereiche der Schlachthalle ausgeschlossen. Abschließend wird darauf hingewiesen, dass die Erfindungsgedanken nicht an die in den Ausführungsbeispielen dargestellten Einzelheiten gebunden sein sollen.

### Aufstellung der verwendeten Bezugszeichen

- 1 -: Trennmittel
- 1.1 -: Wirkbereich
- 2 -: Trennmittel
- 2.1-: Wirkbereich
- 3-: Führung
- 4 -: Aufnahmeelement
- 5 -: Einstellelement
- 6 -: Griffelement
- 7 -: Antrieb
- 8 -: Erfassungseinrichtung
- 9 -: Auswert- und Steuerteil
- 10 -: Druckelement
- 11 -: Schlachttierkörper
- 12 -: Wirbelsäule
- 13 -: Wirbelkörper
- 14 -: Wirbelkanal
- α -: Schnittwinkel

## Patentansprüche

1. Verfahren zum Separieren des Wirbelkanals aus Schlachttierkörpern, wobei der Schlachttierkörper aufgebrochen sowie ausgenommen, zumindest an seinen gespreizten Hinterkeulen aufgehängt und entsprechend arretiert ist, und bei welchem zwei nebeneinander angeordnete Trennmittel zur Anwendung kommen, die von der Keule her zum Hals geführt werden, **dadurch gekennzeichnet, dass** die Trennmittel an ihren Führungen vor der Bauchseite des Schlachttierkörpers automatisch und/oder manuell derart schräg zueinander gestellt werden, dass Wirbelkörpermaterial in Form eines den Wirbelkanal aufnehmenden Keils aus den Wirbelkörpern geschnitten wird.

2. Verfahren nach Anspruch 1, **dadurch gekennzeichnet, dass** sich nach der Schrägstellung der Trennmittel der Wirbelkanal nahe des Scheitels eines sich bildenden spitzen Schnittwinkels befindet und der Schnitt jedes Trennmittels innerhalb der Wirbelkörper und gegebenenfalls bis in die Domfortsätze, den Schnitt des anderen Trennmittels hinter dem Wirbelkanal kreuzend, erfolgt, wobei jedes Trennmittel separat, automatisch und/oder manuell, horizontal und vertikal ver- und einstellbar ist.

3. Verfahren nach einem der Ansprüche 1 oder 2, **dadurch gekennzeichnet, dass** das Schlachttier zumindest im Wirbelkörperbereich von der Bauchseite her mit Druckelementen in Wirkkontakt gebracht wird.

4. Verfahren nach einem der Ansprüche 1 bis 3, **dadurch gekennzeichnet, dass** der Trennschnitt des einen Trennmittels dem des anderen Trennmittels folgend durchgeführt wird.

5. Vorrichtung zum Separieren des Wirbelkanals aus Schlachttierkörpern, wobei der Schlachttierkörper aufgebrochen sowie ausgenommen, zumindest an seinen gespreizten Hinterkeulen aufgehängt und entsprechend arretiert ist, und bei welcher im wesentlichen zwei nebeneinander angeordnete Trennmittel zur Anwendung kommen, die von der Keule her zum Hals geführt werden, **dadurch gekennzeichnet, dass** die Trennmittel (1; 2) jeweils neben den Wirbelkörpern (13) und an ihren Führungen (3) vor der Bauchseite des Schlachttierkörpers (11) schräg zueinander, einen spitzen Schnittwinkel (α) bildend, automatisch und/oder manuell verstell- und arretierbar angeordnet sind, und die Wirkbereiche (1.1; 2.1) der Trennmittel (1; 2) sich hinter dem Wirbelkanal (14) kreuzend eingestellt sind.

6. Vorrichtung nach Anspruch 5, **dadurch gekennzeichnet, dass** die Führungen (3) der Trennmittel (1; 2) als säulen- oder schwalbenschwanzähnliche Ständerführungen und die den Führungen (3) zugeordneten Aufnahmeelemente (4) der Trennmittel (1;2) mit Einstellelementen (5) zur Schnittwinkel-, vertikalen und horizontalen Einstellung der Trennmittel (1; 2) ausgebildet sind.

7. Vorrichtung nach einem der Ansprüche 5 oder 6, **dadurch gekennzeichnet, dass** die Trennmittel (1; 2) über ihre Aufnahmeelemente (4) mittels Griffelementen (6) einzeln oder mittels eines die Trennmittel (1; 2) oder deren Aufnahmeelemente (4) verbindenden Steuerarmes gemeinsam manuell an den Führungen (3) vertikal bewegbar ausgebildet sind.

8. Vorrichtung nach einem der Ansprüche 5 bis 7, **dadurch gekennzeichnet, dass** die Aufnahmeelemente (4) mittels motorischer Antriebe (7) an den Führungen (3) vertikal bewegbar ausgebildet sind.

9. Vorrichtung nach einem der Ansprüche 5 bis 8, **dadurch gekennzeichnet, dass** zur automatischen Ansteuerung der motorischen Antriebe (7) der Aufnahmeelemente (4) und zur automatischen Verstell- und Arretierung der Schnittwinkel-, vertikalen und horizontalen Einstellung der Trennmittel (1; 2) eine Steuerung zur Anwendung kommt, die zumindest eine optische Erfassungseinrichtung (8) für die Wirbelkörperpartie und einen Auswert- und Steuerteil (9) aufweist, der mit den motorischen Antrieben (7) der Aufnahmeelemente (4) und mit den Einstellelementen (5) in Wirkverbindung steht.

10. Vorrichtung nach einem der Ansprüche 5 bis 9, **dadurch gekennzeichnet, dass** als Trennmittel (1; 2) kettensägenartige Trennelemente zur Anwendung kommen, denen ein Einzel- oder ein Zentralantrieb zugeordnet ist.

11. Vorrichtung nach einem der Ansprüche 5 bis 9, **dadurch gekennzeichnet, dass** als Trennmittel (1; 2) Laser zur Anwendung kommen, denen eine Einzel- oder eine Zentralsteuerung zugeordnet ist.
